# EUROPÄISCHE PATENTANMELDUNG

(11) **EP 4 245 612 A1**
(43) Veröffentlichungstag der Anmeldung: **20.09.2023**
(21) Anmeldenummer: 23162103.8
(22) Anmeldetag: 15.03.2023
(51) Int. Cl.: B60R 11/02

(54) **MOBILE INSTRUMENTENVORRICHTUNG FÜR AUFSITZMÄHER**

(30) Priorität: 15.03.2022 DE 202022101376 U
(71) Anmelder: AL-KO Geräte GmbH, 89359 Kötz (DE)
(72) Erfinder: KEMPFLE, Thomas, 89346 Bibertal (DE); KRÄNZLE, Bernhard, 89423 Gundelfingen (DE); HUBER, Jochen, 89364 Rettenbach (DE)
(74) Vertreter: ERNICKE Patent- und Rechtsanwälte PartmbB

(57) **Zusammenfassung**

Vorrichtung zur Halterung und Positionierung eines mobilen Bildschirmgeräts (90) an einem Aufsitzmäher (50). Die Vorrichtung (1) umfasst einen Grundkörper (10) und eine Gerätehalterung (20). Die Vorrichtung (1) ist dazu ausgebildet, einen Bildschirm (91) des mobilen Bildschirmgeräts (90) in einer vorbestimmten Anzeigeposition (P) lösbar am Aufsitzmäher (50) anzuordnen und Betriebsinformationen über den Betrieb des Aufsitzmähers auf dem Bildschirm (91) des mobilen Bildschirmgeräts (90) auszugeben. Die Gerätehalterung (20) ist dazu ausgebildet, den Bildschirm (91) des mobilen Bildschirmgeräts (90) hinter einer Öffnung eines Lenkrads (52) anzuordnen, wobei die Gerätehalterung (20) eine Einspannvorrichtung (21) für das mobile Bildschirmgerät (90) umfasst.

## Beschreibung

Die Erfindung liegt auf dem Gebiet der fahrbaren Garten- und Landschaftsgeräte, insbesondere Kleintraktoren und Aufsitzmäher.

Aufsitzmäher oder Rasentraktoren sind selbstfahrende Mäher, auf denen ein Fahrer Platz nehmen kann, um den Mäher während des Betriebs zu steuern. Ein Aufsitzmäher umfasst üblicherweise ein Mähwerk, ein Fahrwerk, einen offenen oder geschlossenen Führerstand, eine zum Teil verkleidete Karosserie, eine Lenkung und einen elektrischen oder verbrennungsmotorischen Antrieb. Alternativ zu Aufsitzmähern kann die Erfindung auch für weitere fahrbare Landschaftsgeräte eingesetzt werden. Da fahrbare Garten- und Landschaftsgeräte wie Kleintraktoren und Aufsitzmäher in verschiedenen ähnlichen Bauformen bestehen, wird im Folgenden vereinfachend von Fahrzeugen oder repräsentativ von Aufsitzmähern gesprochen, wobei die Erfindung und der Schutzbereich nicht auf die Anwendung in Aufsitzmähern beschränkt sind.

Je nach Preisklasse und Flächenleistung sind Aufsitzmäher und Kleintraktoren für den Gartenbereich mit mehr oder weniger aufwändigen Instrumenten ausgestattet und verfügen häufig nur über eine einfache Elektronik. Viele Modelle haben gar keine elektronischen Anzeigeinstrumente.

Es besteht das Bedürfnis die Bedienung der Aufsitzmäher zu vereinfachen und dem Benutzer zusätzliche digital unterstützte Funktionen anzubieten. Aufgabe der Erfindung ist es, eine verbesserte Instrumentenvorrichtung für Aufsitzmäher und ähnliche Fahrzeuge bereit zu stellen.

Die Erfindung löst die Aufgabe mit den Merkmalen der eigenständigen Ansprüche.

Die erfindungsgemäße Vorrichtung dient zur Halterung und Positionierung eines mobilen Bildschirmgeräts (90), z.B. eines Smartphones oder eines Tablets, in einer vorbestimmten Position am Fahrzeug. Das mobile Gerät kann lösbar in der Vorrichtung befestigt, z.B. eingelegt, eingesteckt oder eingespannt werden. Die Vorrichtung ist dazu ausgebildet Betriebsinformationen über den Betrieb des Fahrzeugs auszutauschen und auf dem Bildschirm des mobilen Geräts bereitzustellen und je nach Ausführungsform auch Benutzereingaben oder andere Daten des mobilen Geräts zu erfassen.

Durch die Erfindung kann der Benutzer des Aufsitzmähers sein Smartphone als Instrumentenanzeige und Bedienungshilfe für den Aufsitzmäher verwenden. Durch die zumindest teilweise Auslagerung der Datenbereitstellung auf ein mobiles Endgerät kann die leistungsfähige Elektronik eines gängigen Smartphones mittels Software zur Funktionserweiterung des Aufsitzmähers genutzt werden. Außerdem kann der Benutzer das mobile Endgerät vor und nach dem Betrieb des Aufsitzmähers aus der Vorrichtung entnehmen und auch an anderer Stelle auf Funktionen oder Daten des Aufsitzmähers zugreifen. So kann beispielsweise bereits vor dem Mäheinsatz im Büro oder zuhause auf rohe oder weiterverarbeitete Betriebsdaten, z.B. Mähdaten wie das Datum des letzten Mähens oder einen prognostizierten Mähbedarf, zugegriffen werden. Sensorbasierte Betriebsdaten des Fahrzeugs können auf dem mobilen Endgerät insbesondere durch Softwarefunktionen und Daten aus anderen Quellen kombiniert und angereichert werden.

Durch die lösbare Anordnung eines Bildschirms am Fahrzeug, kann das Bildschirmgerät jederzeit ausgetauscht und auch anderweitig verwendet werden.

In einer besonders vorteilhaften Ausführungsform kann die Vorrichtung als Nachrüstkomponente ausgebildet sein. Mit einer nachrüstbaren Vorrichtung können auch elektronisch sehr einfach ausgestattete Fahrzeuge mit zusätzlichen Funktionen ausgestattet werden. In einer besonders vorteilhaften Ausführungsform ist die Vorrichtung bündig in ein Karosserieelement, z.B. eine Motorabdeckung, ähnlich einem Armaturenbrett einbettbar.

Ein weiterer Vorteil der Vorrichtung besteht in der gezielten Anordnung des mobilen Bildschirmgeräts am Fahrzeug. Die Vorrichtung sollte während des Betriebs in einer für den Fahrer gut sichtbaren Position angeordnet sein und auch bei Fahrten über unebenes Gelände sicher gehalten werden. Die Position des mobilen Bildschirmgeräts sollte den Benutzer außerdem während der Bedienung des Fahrzeugs, z.B. beim Lenken oder Schalten, nicht behindern. Auch bei Sonneneinstrahlung sollte der Inhalt auf dem Bildschirm gut lesbar sein.

In der bevorzugten Ausführungsform ist die Vorrichtung dazu ausgebildet den Bildschirm des mobilen Bildschirmgeräts in einer Anzeigeposition hinter dem Lenkrad des Fahrzeugs anzuordnen. Besonders bei Speichenlenkrädern mit einer Öffnung zwischen dem Umfang des Lenkrads und radialen Speichen, durch die der Fahrer durch das Lenkrad hindurch auf die Karosserieteile hinter dem Lenkrad blicken kann, ist diese Anordnung vorteilhaft. Die Anordnung hinter dem Lenkrad, ähnlich einem Armaturenbrett in PKWs, ist besonders vorteilhaft, um das mobile Gerät in einer gewohnten und gut sichtbaren Position im Sichtfeld des Fahrers anzuordnen und gleichzeitig sicher und ohne Behinderung der Lenkbewegungen zu halten. Die vorbestimmte Anordnung des mobilen Geräts in der Anzeigeposition verbessert die Ergonomie des Systems. Die erfindungsgemäße Vorrichtung ist insbesondere vorteilhaft gegenüber einfachen Handyhalterungen, die am Lenkrad selbst befestigt werden und bei Lenkbewegungen stören oder bei denen das Handy leicht aus der Halterung geschlagen werden kann.

Die Vorrichtung umfasst einen Grundkörper und eine Gerätehalterung. Mit dem Grundkörper kann die Vorrichtung an der Karosserie des Fahrzeugs befestigt werden. Die Gerätehalterung dient zur lösbaren Aufnahme des Bildschirms in der gewünschten Anzeigeposition. Vorzugsweise ist die Gerätehalterung so ausgebildet, dass mobile Geräte unterschiedlicher Abmessungen aufgenommen und sicher gehalten werden können. Die Gerätehalterung ist dazu ausgebildet, den Bildschirm des Bildschirmgeräts hinter einem Lenkrad anzuordnen. Vorzugsweise wird der Bildschirm hinter einer Öffnung, d.h. einem Sichtfenster, im Lenkrad angeordnet. Eine solche Öffnung ist bei den meisten Lenkrädern zwischen den Lenkradspeichen vorhanden.

In der bevorzugten Ausführungsform umfasst die Vorrichtung, insbesondere die Gerätehalterung, eine Einspannvorrichtung mit einer federnden Klappe. Die Einspannvorrichtung hält das Bildschirmgerät sicher in der vorgesehenen Position. Die Einspannvorrichtung und insbesondere die federnde Klappe sind besonders vorteilhaft für den Einsatz an Aufsitzmähern. Die Anordnung eines Bildschirmgeräts an einem Aufsitzmäher ist im Vergleich zu sonstigen Fahrzeugen, z.B. Autos, besonders herausfordernd, da Aufsitzmäher in der Regel offen, d.h. ohne geschlossene Fahrerkabine, gebaut sind. Außerdem bewegen sich Aufsitzmäher in der Regel über unebenes Gelände und verfügen über keine besonders weiche Federung und Dämpfung, sodass der Aufsitzmäher häufig starken Erschütterungen ausgesetzt ist, die besondere Anforderungen an die Anordnung und Halterung des Bildschirmgeräts, insbesondere im Vergleich zu einer Handyhalterung in einem PKW, stellen.

Eine Einspannvorrichtung mit federnder Klappe ist besonders einfach und ergonomisch zu bedienen und hat, insbesondere in Kombination mit der Anordnung hinter dem Lenkrad des Aufsitzmähers, besondere Vorteile. Der Benutzer kann die Klappe für das Bildschirmgerät mit nur einer Hand anheben. Die federnde Klappe hält das Bildschirmgerät sicher und schützt vor Sonneneinstrahlung und Erschütterungen.

Die Vorrichtung umfasst vorzugsweise eine oder mehrere elektronische Komponenten zur Bereitstellung digitaler Funktionen. Die Vorrichtung ist dazu ausgebildet, dem Fahrer Betriebsinformationen des Aufsitzmähers zur verbesserten Bedienung und elektronischen Funktionserweiterung des Fahrzeugs auf dem Bildschirm des mobilen Bildschirmgeräts bereitzustellen. Durch die Bereitstellung der vorzugsweise sensorgestützten Betriebsdaten des Aufsitzmähers wird das mobile Bildschirmgerät zu einer Funktionserweiterung des Aufsitzmähers, insbesondere als Menschmaschinenschnittstelle und/oder leistungsfähigen elektronischen Datenverarbeitungseinheit verwendbar. Neben der reinen Anzeige von Information können auch funktionale Betriebsdaten, Steuerdaten und/oder Benutzereingabedaten zwischen dem Fahrzeug und dem mobilen Gerät ausgetauscht und dem Benutzer zur Steuerung des Fahrzeugs bereitgestellt werden.

Die Vorrichtung dient als ergonomische Unterstützung des Fahrers, insbesondere durch die Bereitstellung relevanter Daten, um die Funktionen bei der Benutzung des Fahrzeugs zu erweitern, die Arbeit mit dem Fahrzeug zu erleichtern, die Freude an der Bedienung zu erhöhen, die Lebensdauer des Fahrzeugs zu verlängern und insbesondere ein besseres Mähergebnis zu erzielen. Auf Basis der Betriebsdaten des Fahrzeugs, ggfs. auch mit zusätzlichen Daten aus einem Cloud-Backend, können vielfältige Funktionen durch die Vorrichtung umgesetzt werden.

Die Betriebsdaten können insbesondere Fahr- und/oder Mähdaten umfassen. Vorzugsweise umfassen die Betriebsdaten Sensordaten über die Geschwindigkeit, Tank- bzw. Ladezustand, Mähkapazität, Mähleistung, Betriebsdauer, Wartungsintervalle der Betriebsmittel, Fehlermeldungen oder den Betriebsmodus des Fahrzeugs. Die Betriebsdaten können neben Sensordaten von Sensoren des Fahrzeugs auch zusätzliche Betriebsdaten aus anderen Quellen umfassen. Es können auch Betriebsdaten aus einer entfernten Quelle über das Internet oder aus Benutzereingaben verarbeitet werden.

In der bevorzugten Ausführungsform umfasst die Vorrichtung eine Datenfunktionseinheit. Die Datenfunktionseinheit ist eine elektronische Datenverarbeitungseinrichtung, z.B. ein Mikrokontroller, ein Mini-Computer oder ein eingebettetes System mit zumindest einem Speicher und einem Prozessor. Bevorzugt ist die Datenfunktionseinheit als eine oder mehrere Komponenten auf einer Platine an der Vorrichtung angeordnet.

Eine weitere vorteilhafte Ausführungsform der Vorrichtung umfasst eine Datensammeleinheit. Die Datensammeleinheit ist dazu ausgebildet Betriebsdaten des Fahrzeugs von einem oder mehreren Betriebsmitteln des Fahrzeugs zu beziehen und/oder zu speichern. Die Datensammeleinheit kann insbesondere als einheitliche Schnittstelle zu einer Reihe unterschiedlicher Sensoren oder Steuergeräten dienen. Auf diese Weise kann die Vorrichtung mit geringfügigen konstruktiven Anpassungen für eine Vielzahl unterschiedlicher Fahrzeugmodelle (z.B. Benzintraktoren, Elektromäher, Kleintraktoren zum Schneeräumen) mit unterschiedlichen Betriebsmitteln eingesetzt werden. Betriebsmittel des Fahrzeugs sind z.B. der Antrieb, die (Motor-)Steuerung, die Lenkung, ein oder mehrere Mähwerke, Steuerungen oder Sensoren für Fahrzeuganbauten (z.B. Anhängerkupplungen, Räumschilder, etc.), Tankfüllstandsensoren oder Sicherheitsvorrichtungen (z.B. Neigungssensoren, Sensoren zur Feststellung, ob der Fahrer auf dem Fahrersitz sitzt, oder eine Abdeckung zu einem Mähwerk geöffnet ist). Je nach Ausführungsform kann die Vorrichtung Schnittstellen zu Datenquellen wie Sensoren oder Datenverarbeitungseinheiten (z.B. ECU, Steuergräte) oder zusätzliche Sensoren zur direkten Erfassung der Daten umfassen. Vorzugsweise umfasst die Datensammeleinheit einen Anschluss an einen Kabelbaum des Fahrzeugs.

In einer besonders vorteilhaften Ausführungsform ist die Vorrichtung dazu ausgebildet, eine Internetverbindung über das mobile Bildschirmgerät herzustellen. Hierzu können insbesondere bekannte Tethering-Technologien eingesetzt werden. Die Vorrichtung kann insbesondere über eine Bluetooth- und/oder WLAN-Verbindung mit dem mobilen Gerät eine mobile Internetverbindung des mobilen Bildschirmgeräts nutzen. Alternativ oder zusätzlich ist auch eine direkte Internetverbindung der Vorrichtung möglich.

Über die Internetverbindung können insbesondere Betriebsdaten an ein Cloud-Backend gesendet und von dort abrufen werden. Auch Aktualisierungsdaten (z.B. Firmware-Update) können von einem Cloud-Backend abgerufen bzw. von diesem für die Vorrichtung bereitgestellt werden. Die Übertragung der Betriebsdaten (z.B. Sensordaten des Fahrzeugs zum Wartungsbedarf oder der Mähleistung) an ein Cloud-Backend hat mehrere Vorteile. Zum einen kann die Rechen- und Speicherkapazität und ortsabhängige Verfügbarkeit eines Cloud-Rechenzentrums genutzt werden. Außerdem können die Betriebsdaten des Fahrzeugs im Cloud-Backend weiterverarbeitet werden und in verarbeiteter Form zur Verfügung gestellt werden. Auf diese Weise können beispielsweise Betriebsdaten über längere Zeiträume oder von mehreren Fahrzeugen aggregiert werden. Die Betriebsdaten können auch mit weiteren Daten angereichert werden, z.B. mit Geoinformationen, Wetterdaten oder Benutzervorgaben, die über ein Webinterface eingegeben werden.

Weitere Ausführungsformen der Erfindung werden nachfolgend anhand der Zeichnungen im Detail beschrieben. Die oben und im Folgenden beschriebenen Ausführungsformen sind nur eine Auswahl an besonders vorteilhaften Ausführungsformen der Erfindung. Die jeweils offenbarten (Einzel-)Merkmale und Merkmalskombinationen können auch miteinander kombiniert, ergänzt oder weggelassen werden. Auch solche Ausführungsformen sind Gegenstand dieser Offenbarung.

Die Erfindung ist in den Zeichnungen beispielhaft und schematisch dargestellt.

### Liste der Figuren:

- Figur 1:: zeigt eine perspektivische Ansicht einer vorteilhaften Ausführungsform der Vorrichtung (1) mit einem aus der Vorrichtung herausgelösten mobilen Bildschirmgerät (90).
- Figur 2:: zeigt eine schematische Perspektive auf einen Aufsitzmäher (50) mit einer integrierten Vorrichtung (1), die das mobile Bildschirmgerät (90) in der Anzeigeposition (P) hinter dem Lenkrad (52) des Aufsitzmähers anordnet.
- Figur 3:: zeigt eine Vorrichtung (1) mit einem mobilen Bildschirmgerät (90) in der Anzeigeposition (P).
- Figur 4:: zeigt eine Seitenansicht einer Vorrichtung (1) mit einem in die Gerätehalterung (20) eingespannten mobilen Bildschirmgerät (90).
- Figur 5:: zeigt die Rückseite einer Vorrichtung (1).

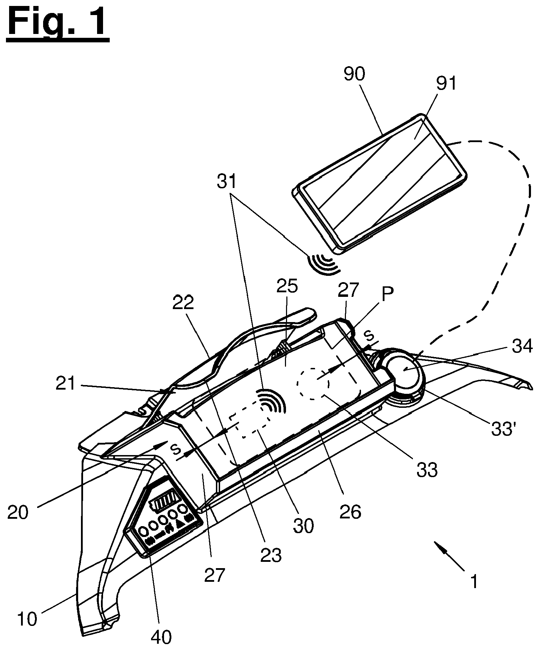

In Figur 1 wird eine vorteilhafte Ausführungsform der Vorrichtung (1) gezeigt. Die Vorrichtung (1) umfasst einen Grundkörper (10) und eine Gerätehalterung (20). Der Grundkörper ist dazu ausgebildet, die Vorrichtung (1) am Fahrzeug zu befestigen, vorzugsweise an einem Karosserieelement. Der Grundkörper trägt die Vorrichtung und ordnet die Gerätehalterung an der gewünschten Position am Fahrzeug an.

Die Gerätehalterung (20) ist dazu ausgebildet, das mobile Bildschirmgerät (90) lösbar aufzunehmen und in der Anzeigeposition (P) zu halten. Die Gerätehalterung (20) umfasst in der dargestellten bevorzugten Ausführungsform eine Einspannvorrichtung (21) mit einer Klappe (22). Die Einspannvorrichtung (21) kann insbesondere elastische Rückstellmittel, z.B. Federn, zum kraftschlüssigen und/oder formschlüssigen Einspannen des mobilen Bildschirmgeräts (90) umfassen.

Die Klappe (22) ist vorzugsweise dazu ausgebildet, das mobile Bildschirmgerät (90) an der oberen Kante (d.h. in Einbaulage in vertikaler Richtung oben) zu halten. Die Klappe (22) ist schwenkbar gelagert und kann vorzugsweise mit der Hand geöffnet werden. So kann das mobile Bildschirmgerät (90) bei geöffneter Klappe in die Gerätehalterung (20) eingelegt werden und mit der Klappe (20), vorzugsweise durch elastische Federn, in der Gerätehalterung (20) fixiert werden.

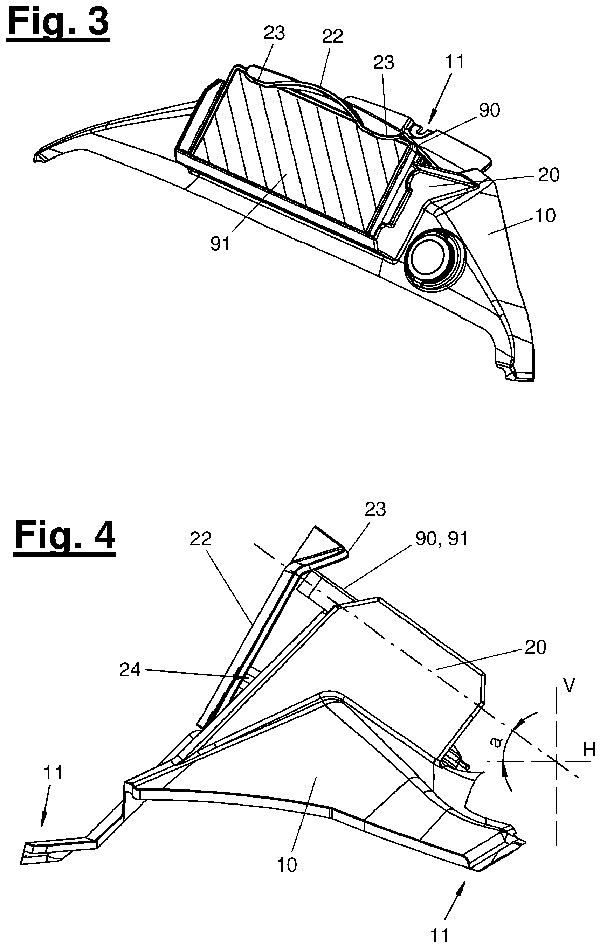

Figuren 3 und 4 zeigen die Vorrichtung (1) mit einem mobilen Bildschirmgerät (90) in der Anzeigeposition (P) in der Geräteaufnahme (20) aus unterschiedlichen Ansichten. Die Klappe (22) kann in einer besonders vorteilhaften Ausführungsform einen Greifabschnitt (23), z.B. in Form eines abgewinkelten Endes der Klappe, der dazu ausgebildet ist, das mobile Bildschirmgerät (90) in der Anzeigeposition (P) zu umgreifen, d.h. an einer Kante von zumindest zwei Seiten zu halten (z.B. oben und vorne). Durch den Greifabschnitt liegt die Klappe (20) nicht nur von einer Seite (oben) auf, sondern hält das mobile Gerät zusätzlich an einer weiteren Seite (vorne) und beschränkt damit einen weiteren Freiheitsgrad des Geräts. Durch das Umgreifen der Kante des mobilen Bildschirmgeräts (90) wird der sichere Halt des Geräts auch bei Fahrten über unebenes Gelände verbessert.

Die Gerätehalterung (20) bildet vorteilhafterweise eine Schalung für das mobile Gerät. Bevorzugt umfasst die Gerätehalterung (20) eine rückseitige Anlagefläche (25) und/oder eine untere Anlagekante (26) und/oder mindestens eine seitliche Begrenzungskante (27). Figur 3 zeigt die Vorrichtung (1) und ein beispielhaftes mobiles Bildschirmgerät (90) in der Anzeigeposition (P).

Die Richtungsangaben oben, unten und seitlich beziehen sich auf die Richtungen in der vorbestimmten Einbaulage am Fahrzeug, das auf einer ebenen horizontalen Fläche steht, wobei die Seiten in horizontaler Richtung quer zur Fahrtrichtung zu sehen sind. Die Angaben Rückseite und Vorderseite beziehen sich auf die Vorderseite und Rückseite des mobilen Bildschirmgeräts in der vorgesehenen Anzeigeposition (P) in der Geräteaufnahme (20), wobei der Bildschirm (91) die Vorderseite des mobilen Geräts bildet. Die rückseitige Anlagefläche (26) ist dementsprechend die mit der Rückseite des mobilen Bildschirmgeräts (90) in Kontakt stehende Fläche der Vorrichtung (1).

In der bevorzugten Ausführungsform bilden die untere Anlagekante (26), die seitlichen Begrenzungskanten (27) und die Klappe (22) eine Aufnahmeschale, in die das mobile Gerät eingelegt und sicher gehalten werden kann. Die seitlichen Begrenzungskanten (27) sind vorzugsweise so beabstandet, dass Smartphones der gängigen Größen darin aufgenommen werden können und seitlich Spiel (s) bis zur Anlage an den seitlichen Begrenzungskanten verbleibt. Figur 1 zeigt schematisch, dass zwischen den seitlichen Kanten des mobilen Geräts in der Anzeigeposition (P) und den seitlichen Begrenzungskanten (27) bei den gängigen Smartphone-Abmessungen ein seitliches Spiel (s) verbleibt.

Die untere Anlagekante (26) ist vorzugsweise so gestaltet, dass das mobile Gerät (90) mit dessen unteren Kante durch das Eigengewicht an der unteren Anlagekante anliegt. Besonders vorteilhaft ist eine untere Anlagekante (26) mit einem umgreifenden Abschnitt, der die untere Vorderkante des mobilen Bildschirmgeräts (90) an der Vorderseite zumindest teilweise umgreift. Hierdurch kann das mobile Gerät besonders sicher gehalten und gleichzeitig einfach eingelegt und herausgenommen werden.

Die umgreifenden Abschnitte der Klappe (23) und/oder der unteren Anlagekante (26) ragen vorzugsweise teilweise und/oder nur um wenige Millimeter in die Vorderseite des mobilen Bildschirmgeräts (90), d.h. in den Bildschirm (91), hinein, siehe auch Figur 3. Auf diese Weise ist der Bildschirm (91) je nach Randstärke des Gehäuses noch ganz oder nahezu vollständig sichtbar und das mobile Gerät auch bei unterschiedlichen Abmessungen sicher gehalten.

Figur 4 zeigt eine Seitenansicht der Vorrichtung (1) mit einem eingelegten mobilen Bildschirmgerät (90) in der Anzeigeposition (P). In der Abbildung ist der Winkel des Bildschirmgeräts (90) in der Anzeigeposition (P) bzw. der parallelen rückseitigen Anlagefläche (26) gegenüber einer gedanklichen horizontalen Fläche (H) eingezeichnet. Alle Richtungsangaben und Winkel können auch gegenüber einer gedanklichen vertikalen Seitenebene (V) betrachtet werden. Die Horizontale (H) bezieht sich auf eine ebene horizontale Aufstandsfläche, auf der das Fahrzeug (50) steht und in das die Vorrichtung (1) bestimmungsgemäß eingebaut ist.

Die Vorrichtung (1) ist bevorzugt so ausgebildet, dass das mobile Bildschirmgerät mit dessen Rückseite an der rückseitigen Anlagefläche (26) flächig anliegt. Die rückseitige Anlagefläche (26) der Gerätehalterung (20) ist vorzugsweise mit der Oberseite zur Rückseite geneigt. Der Winkel (a) der Anlagefläche zur Horizontalen beträgt vorzugsweise zwischen 10° und 80°, vorzugsweise zwischen 30° und 45°, besonders bevorzugt um 36°. Die Neigung verbessert die sichere Fixierung des mobilen Geräts in der Halterung und ermöglicht eine Lage, die sich von der Fahrerposition gut einsehen lässt.

Die federnde Klappe (22) trägt zusätzlich dazu bei, dass mobile Geräte unterschiedlicher Größen auch bei Erschütterungen sicher gehalten werden können. Die abgewinkelten Greifabschnitte (23), die die obere vordere Kante des Bildschirmgeräts (90) umgreifen, sind in Figur 4 von der Seite zu sehen.

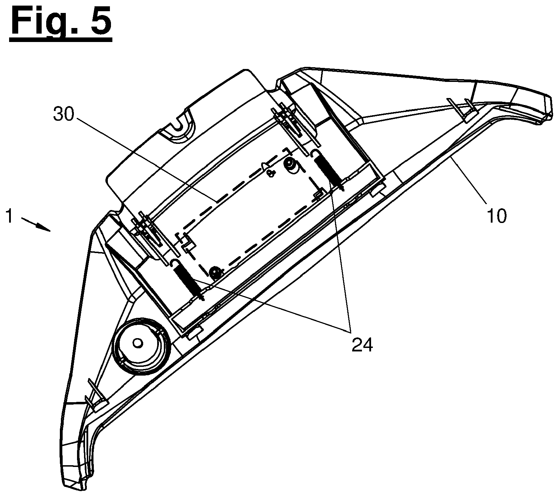

Figur 5 zeigt die Rückseite einer Vorrichtung (1). Die Rückstellmittel (24) der Klappe (22) sind vorzugsweise verborgen auf der Rückseite angeordnet.

In einer bevorzugten Ausführungsform umfasst die Vorrichtung (1) eine Datenfunktionseinheit (30). Die Datenfunktionseinheit (30) ist in den Figuren 1 und 5 schematisch dargestellt. Die elektronischen Funktionskomponenten können mit den unterschiedlichen Anordnungs- und Befestigungsmerkmalen der Vorrichtung in unterschiedlicher Weise und vorteilhaft kombiniert werden. In den Figuren ist eine besonders vorteilhafte Kombination dargestellt.

Die Datenfunktionseinheit umfasst vorzugsweise eine Platine und elektronische Komponenten, die verborgen hinter der rückseitigen Anlagefläche (25) angeordnet ist (siehe Figur 5). Figur 1 zeigt schematisch Aspekte der elektronischen Funktionen der Vorrichtung (1).

Die Datenfunktionseinheit (30) umfasst vorzugsweise eine Datenschnittstelle (31). Die Datenschnittstelle (31) kann als Funk- und/oder Kabelschnittstelle ausgebildet sein. In Figur 1 sind hierzu mehrere Ausführungsformen angedeutet.

Die Datenfunktionseinheit (30) kann insbesondere ein kabelloses Kommunikationsmodul, z.B. ein Bluetooth-, NFC- oder WLAN-Modul umfassen. Zusätzlich kann die Datenfunktionseinheit auch eine kabellose Ladefunktion (33) umfassen. Sowohl die Kommunikations- als auch Ladefunktion kann durch die strahlungsdurchlässige rückseitige Anlagefläche erfolgen. Die Kommunikationsverbindung kann alternativ oder zusätzlich aber auch außerhalb der Anzeigeposition im Abstand von einigen Metern aufgebaut bzw. aufrecht erhalten werden (z.B. per Bluetooth oder WLAN).

Alternativ oder zusätzlich kann die Vorrichtung (1) auch einen Kabelanschluss (34), z.B. einen USB-Anschluss, umfassen. Über den Kabelanschluss (34) kann eine Energieversorgung (33) und/oder Datenverbindung mit dem mobilen Gerät oder anderen Geräten (z.B. zu Wartungszwecken) bereitgestellt werden.

Je nach Ausführungsform kann die Vorrichtung auch bordeigene Anzeigemittel (40) umfassen. Die Anzeigemittel (40) können beispielsweise als fest verbaute Instrumente zur Indikation von Fehlern oder Anzeige des Ladezustands eines Akkus des Fahrzeugs (50) dienen. Vorteilhafterweise ist das fest verbaute Anzeigemittel (40) auch unabhängig von der Verbindung mit einem mobilen Bildschirmgerät (90) funktionsfähig und stellt damit eine Mindestfunktion sicher.

Der Grundkörper (10) umfasst vorzugsweise einen oder mehrere Befestigungsabschnitte (11). Die Befestigungsabschnitte (11) sind dazu ausgebildet, den Grundkörper (10) an einem Karosserieelement (51) des Fahrzeugs zu befestigen und vorzugsweise einzubetten.

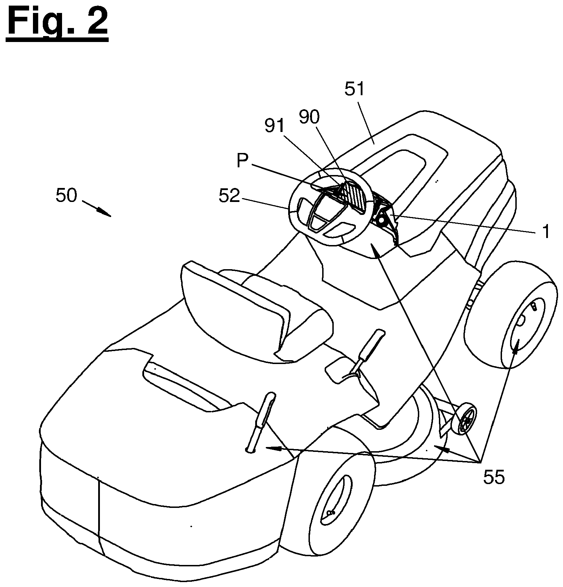

Je nach Ausführungsform kann die Vorrichtung (1) in ein Karosserieelement (51) (z.B. eine Motorabdeckung wie in Figur 2 angedeutet) integriert werden. In Abhängigkeit des Fahrzeugs, z.B. Aufsitzmäher oder Kleintraktoren unterschiedlicher Leistungsklassen und Einsatzgebiete, ist die Vorrichtung, insbesondere der Grundkörper (10) und die Befestigungsabschnitte (11), an die vorbestimmte Position am Fahrzeug und das jeweilige Karosserieelement (51) angepasst.

In einer besonders vorteilhaften Ausführungsform fügt sich die Vorrichtung (1) bündig in ein Karosserieelement (51) ein, was sowohl die Ästhetik als auch die Abdichtung und Ergonomie der Vorrichtung verbessert.

Zusätzlich zu den oben beschriebenen und in den Ansprüchen beanspruchten Ausführungsformen umfasst die Offenbarung außerdem die folgenden Ausführungsformen.

Vorrichtung zur Halterung und Positionierung eines mobilen Bildschirmgeräts (90) an einem Fahrzeug, insbesondere einem Aufsitzmäher (50), wobei die Vorrichtung (1) einen Grundkörper (10) und eine Gerätehalterung (20) umfasst, wobei die Vorrichtung (1) dazu ausgebildet ist, einen Bildschirm (91) des mobilen Bildschirmgeräts (90) in einer vorbestimmten Anzeigeposition (P) lösbar am Fahrzeug anzuordnen und Betriebsinformationen über den Betrieb des Fahrzeugs auf dem Bildschirm (91) des mobilen Bildschirmgeräts (90) auszugeben.

Vorrichtung nach einer der beschriebenen oder beanspruchten Ausführungsformen, wobei die Vorrichtung (1) dazu ausgebildet ist, den Bildschirm (91) des mobilen Bildschirmgeräts (90) im Sichtbereich eines Fahrers des Fahrzeugs, vorzugsweise hinter einer Öffnung eines Lenkrads (52), anzuordnen und/oder zu fixieren.

Vorrichtung nach einer der beschriebenen oder beanspruchten Ausführungsformen, wobei die Vorrichtung (1), insbesondere der Grundkörper (10), dazu ausgebildet ist, an einem Karosserieelement (51) des Fahrzeugs befestigt zu werden und/oder in ein Karosserieelement (51) des Fahrzeugs, insbesondere in eine Blende oder ein Motorgehäuse hinter dem Lenkrad, integriert zu werden.

Vorrichtung nach einer der beschriebenen oder beanspruchten Ausführungsformen, umfassend eine Datenfunktionseinheit (30).

Vorrichtung nach einer der beschriebenen oder beanspruchten Ausführungsformen, wobei die Datenfunktionseinheit (30), vorzugsweise verborgen hinter der rückseitigen Anlagefläche (25), am Grundkörper (10) angeordnet ist.

Vorrichtung nach einer der beschriebenen oder beanspruchten Ausführungsformen, wobei die Datenfunktionseinheit (30) dazu ausgebildet ist, Steuerungsdaten und/oder Software-Aktualisierungsdaten zu verarbeiten, die von dem mobilen Bildschirmgerät (90) bereitgestellt werden.

Vorrichtung nach einer der beschriebenen oder beanspruchten Ausführungsformen, wobei die Datensammeleinheit eine standardisierte Datenschnittstelle für Betriebsmittel (55) verschiedener Fahrzeugvarianten, insbesondere Aufsitzmäher (50) mit Verbrennungsmotor oder elektrischem Antrieb, bildet.

Vorrichtung nach einer der beschriebenen oder beanspruchten Ausführungsformen, wobei die Gerätehalterung (20) eine rückseitige Anlagefläche (25) und/oder eine untere Anlagekante (26) und/oder mindestens eine seitliche Begrenzungskante (27) umfasst.

Vorrichtung nach einer der beschriebenen oder beanspruchten Ausführungsformen, wobei die Gerätehalterung (20) eine um einen Winkel (a) zwischen 10° und 80°, vorzugsweise zwischen 30° und 45°, besonders bevorzugt um 36°, zur horizontalen Aufstandsebene (H) des Fahrzeugs geneigte rückseitige Anlagefläche umfasst.

Vorrichtung nach einer der beschriebenen oder beanspruchten Ausführungsformen, wobei die Gerätehalterung (20), insbesondere die rückseitige Anlagefläche (25), eine oder mehrere reibungsverstärkende und/oder stoßdämpfende, vorzugsweise gummierte oder mit Gummipuffern versehene, Oberflächen umfasst.

Vorrichtung nach einer der beschriebenen oder beanspruchten Ausführungsformen, umfassend eine kabellose und/oder kabelgebundene Energieversorgung (33) für das mobile Bildschirmgerät (90).

Vorrichtung nach einer der beschriebenen oder beanspruchten Ausführungsformen, umfassend eine kabellose und/oder kabelgebundene Datenschnittstelle (31) für das mobile Gerät (90).

Vorrichtung nach einer der beschriebenen oder beanspruchten Ausführungsformen, wobei die Gerätehalterung (20) eine umfangseitige Schalung bildet, in der mindestens zwei Kanten des mobilen Geräts (90) in der Anzeigeposition (P) in der Schalung aufgenommen sind und der Bildschirm (91) sichtbar ist.

Vorrichtung nach einer der beschriebenen oder beanspruchten Ausführungsformen, wobei die Vorrichtung (1) als Nachrüstkomponente, insbesondere zur Integration in ein Karosserieelement (51), ausgebildet ist.

Vorrichtung nach einer der beschriebenen oder beanspruchten Ausführungsformen, wobei die Vorrichtung (1) dazu ausgebildet ist, ein Karosserieelement (51), insbesondere eine Blende, ein Armaturenbrett, eine Schalung oder ein Gehäuse, ganz oder teilweise zu ersetzen.

Vorrichtung nach einer der beschriebenen oder beanspruchten Ausführungsformen, umfassend ein oder mehrere Befestigungsabschnitte (11) zur Montage der Vorrichtung (1) an einem Karosserieelement (51) des Fahrzeugs (50).

Vorrichtung nach einer der beschriebenen oder beanspruchten Ausführungsformen, wobei der mindestens eine Befestigungsabschnitt (11) zur flächigen und/oder bündigen Einbettung der Vorrichtung (1) in das Karosserieelement (51) ausgebildet ist.

Vorrichtung nach einer der beschriebenen oder beanspruchten Ausführungsformen, wobei die Vorrichtung dazu ausgebildet ist, das mobile Bildschirmgerät (90) in der Anzeigeposition (P) unbeweglich am Fahrzeug anzuordnen.

Vorrichtung nach einer der beschriebenen oder beanspruchten Ausführungsformen, wobei die Vorrichtung (1) ein oder mehrere Anzeigemittel (40), insbesondere zur Anzeige von Zustandsdaten des Fahrzeugs (50) und/oder der Vorrichtung (1) umfasst.

Aufsitzmäher nach einem der Ansprüche, wobei der Aufsitzmäher einen elektrischen Antrieb oder einen verbrennungsmotorischen Antrieb umfasst.

System mit einer Vorrichtung (1) und einem mobilen Bildschirmgerät (90), das eine Datenschnittstelle (31) für den Datenaustausch mit einer Datenfunktionseinheit (30) der Vorrichtung (1) umfasst.

System wie oben beschrieben, wobei das mobile Bildschirmgerät (90) ein Softwaremodul zur Datenverarbeitung und Funktionserweiterung der Vorrichtung (1) umfasst.

**Bezugszeichen**

| | | |
|---|---|---|
| 1 | Vorrichtung | device |
| 10 | Grundkörper | main body |
| 11 | Befestigungsabschnitt | fixing portion |
| 20 | Gerätehalterung | device mount |
| 21 | Einspannvorrichtung | clamping device |
| 22 | Klappe | flap |
| 23 | Greifabschnitt | grabbing portion |
| 24 | Rückstellmittel | resetting means |
| 25 | rückseitige Anlagefläche | rear contact surface |
| 26 | untere Anlagekante | bottom contact edge |
| 27 | seitliche Begrenzungskante | lateral limiting edge |
| 30 | Datenfunktionseinheit | data functional unit |
| 31 | Datenschnittstelle | data interface |
| 33 | Energieversorgung | energy supply |
| 34 | Kabelanschluss | cable connector |
| 40 | Anzeigemittel | indicator means |
| 50 | Aufsitzmäher, Kleintraktor | ride-on mower, compact tractor |
| 51 | Karosserieelement | body element |
| 52 | Lenkrad | steering wheel |
| 55 | Betriebsmittel | operating equipment |
| 90 | mobiles Bildschirmgerät | mobile screen device |
| 91 | Bildschirm | screen |
| P | Anzeigeposition | display position |

## Patentansprüche

1. Vorrichtung zur Halterung und Positionierung eines mobilen Bildschirmgeräts (90) an einem Aufsitzmäher (50), wobei die Vorrichtung (1) einen Grundkörper (10) und eine Gerätehalterung (20) umfasst, wobei die Vorrichtung (1) dazu ausgebildet ist, einen Bildschirm (91) des mobilen Bildschirmgeräts (90) in einer vorbestimmten Anzeigeposition (P) lösbar am Aufsitzmäher (50) anzuordnen und Betriebsinformationen über den Betrieb des Aufsitzmähers auf dem Bildschirm (91) des mobilen Bildschirmgeräts (90) auszugeben, wobei die Gerätehalterung (20) dazu ausgebildet ist, den Bildschirm (91) des mobilen Bildschirmgeräts (90) hinter einer Öffnung eines Lenkrads (52) anzuordnen, wobei die Gerätehalterung (20) eine Einspannvorrichtung (21) für das mobile Bildschirmgerät (90) umfasst.

2. Vorrichtung nach Anspruch 1, umfassend eine Datenfunktionseinheit (30).

3. Vorrichtung nach Anspruch 2, wobei die Datenfunktionseinheit (30) dazu ausgebildet ist, Betriebsdaten des Fahrzeugs zu verarbeiten und/oder Daten zwischen dem Fahrzeug und dem mobilen Gerät (90) auszutauschen und/oder Betriebsdaten des Fahrzeugs auf dem mobilen Bildschirmgerät (90) zur Anzeige zu bringen und/oder Steuerungsdaten von dem mobilen Gerät (90) zu empfangen.

4. Vorrichtung nach einem der vorhergehenden Ansprüche, wobei die Datenfunktionseinheit (30) eine Datenschnittstelle (31), insbesondere eine Netzwerk-, Funk- und/oder Nahfeldkommunikationsschnittstelle, umfasst.

5. Vorrichtung nach einem der vorhergehenden Ansprüche, wobei die Datenfunktionseinheit (30) dazu ausgebildet ist eine Netzwerkverbindung, insbesondere eine Internetverbindung, über das mobile Bildschirmgerät (90) herzustellen.

6. Vorrichtung nach einem der vorhergehenden Ansprüche, wobei die Datenfunktionseinheit (30) eine Datensammeleinheit umfasst, die dazu ausgebildet ist, Betriebsdaten des Fahrzeugs, insbesondere von einem oder mehreren Betriebsmitteln (55), vorzugsweise einem Antrieb, einer Steuerung oder eines Mähwerks, zu erfassen.

7. Vorrichtung nach einem der vorhergehenden Ansprüche, wobei die Einspannvorrichtung (21) dazu ausgebildet ist, das mobile Bildschirmgerät (90) lösbar in der Anzeigeposition (P) zu fixieren.

8. Vorrichtung nach einem der vorhergehenden Ansprüche, wobei die Einspannvorrichtung (21) Spannmittel zur kraftschlüssigen und/oder formschlüssigen Fixierung des Bildschirmgeräts (90) umfasst.

9. Vorrichtung nach einem der vorhergehenden Ansprüche, wobei die Einspannvorrichtung (21) eine, vorzugsweise federnde und/oder schwenkbare, Klappe (22) umfasst.

10. Vorrichtung nach Anspruch 9, wobei die Klappe (22) einen, vorzugsweise abgewinkelten, Greifabschnitt (23) umfasst.

11. Vorrichtung nach einem der vorhergehenden Ansprüche, wobei die Einspannvorrichtung ein oder mehrere Rückstellmittel (24), insbesondere Federn, für die Klappe (22) umfasst, um das mobile Bildschirmgerät (90) lösbar in der Einspannvorrichtung zu halten.

12. Vorrichtung nach einem der vorhergehenden Ansprüche, wobei die Gerätehalterung (20) mit der Einspannvorrichtung (21) dazu ausgebildet ist, Bildschirmgeräte (91) unterschiedlicher Abmessungen in der Anzeigeposition (P), insbesondere mittels einer beweglichen Klappe (22), lösbar zu fixieren.

13. Aufsitzmäher mit einer Vorrichtung (1) nach einem der vorhergehenden Ansprüche.

14. Aufsitzmäher nach Anspruch 13, wobei der Aufsitzmäher (50) eine oder mehrere Datenschnittstellen zu einer Datenfunktionseinheit, insbesondere einer Datensammeleinheit, der Vorrichtung (1) umfasst.

15. System mit einer Vorrichtung (1) nach einem der Ansprüche 1 bis 14 und einem mobilen Bildschirmgerät (90), das eine Datenschnittstelle (31) für den Datenaustausch mit einer Datenfunktionseinheit (30) der Vorrichtung (1) umfasst.
